# EUROPEAN PATENT APPLICATION

(11) **EP 4 595 730 A1**
(43) Date of publication of application: **06.08.2025**
(21) Application number: 24220409.7
(22) Date of filing: 17.12.2024
(51) Int. Cl.: A01B 69/00, A01B 76/00

(54) **WORKING VEHICLE**

(30) Priority: 19.01.2024 JP 2024006467
(71) Applicant: Kubota Corporation, Osaka 556-8601 (JP)
(72) Inventor: TAKAYA, Kenta, Sakai-shi, Osaka, 5900908 (JP); TAKEOKA, Susumu, Sakai-shi, Osaka, 5900908 (JP); FUKUYAMA, Akito, Sakai-shi, Osaka, 5900908 (JP)
(74) Representative: Müller-Boré & Partner Patentanwälte PartG mbB

(57) **Abstract**

A weight support portion that is provided in a front portion of a vehicle body and supports a weight member, a front side radar unit capable of detecting a detection target in front of the vehicle body, and a support member that is fixed to an upper surface of the weight support portion and supports the front side radar unit are included.

## Description

### TECHNICAL FIELD

The disclosure relates to a technique of a working vehicle.

### BACKGROUND ART

Conventionally, a technique of a working vehicle including a detection device capable of detecting a surrounding obstacle or the like is known. For example, JP 2022-36628 A discloses such a technique.

JP 2022-36628 A discloses a working vehicle including a weight bracket that supports a front weight, a detection device capable of detecting an obstacle, and a sensor bracket that is fixed to the weight bracket and supports the detection device. In the technique described in JP 2022-36628 A, the sensor brackets are fixed to both left and right side surfaces of the weight bracket.

At the front part of the working vehicle (near a bonnet), it is assumed that a worker performs various works (for example, opening and closing of the bonnet, maintenance of a battery, and the like) from the left and right sides of the vehicle. On the other hand, as described in JP 2022-36628 A, when the sensor brackets are fixed to the left and right side surfaces of the weight bracket, the sensor brackets may obstruct the work by the worker, and the workability may be deteriorated.

### SUMMARY OF INVENTION

One aspect of the present disclosure has been made in view of the above circumstances, and an object of the present disclosure is to provide a working vehicle capable of improving workability such as maintenance by a worker.

The problem to be solved by one aspect of the present disclosure is as described above, and means for solving the problem will be described below.

A working vehicle according to one aspect of the present disclosure includes a weight support portion that is provided in a front portion of a vehicle body and supports a weight member, a front detection section capable of detecting a detection target in front of the vehicle body, and a support member that is fixed to an upper surface of the weight support portion and supports the front detection section.

According to one aspect of the present disclosure, workability such as maintenance by a worker can be improved.

The support member according to one aspect of the present disclosure is formed in a hollow shape.

According to one aspect of the present disclosure, various components can be accommodated inside.

The support member according to one aspect of the present disclosure includes a front side member that forms a front side surface of the support member, and a rear side member that forms a rear side surface of the support member.

According to one aspect of the present disclosure, the support member can have a simple configuration.

The support member according to one aspect of the present disclosure includes a left side surface and a right side surface integrally formed with one of the front side member and the rear side member.

According to one aspect of the present disclosure, the support member can have a simple configuration.

The support member according to one aspect of the present disclosure includes a first portion having a lateral width gradually narrowing from a lower side to an upper side.

According to one aspect of the present disclosure, rigidity of a lower portion of the support member can be improved to suppress vibration of the front detection section. Furthermore, by narrowing the lateral width of an upper portion of the support member, it is possible to make it difficult to block light emitted from a headlight or the like.

The support member according to one aspect of the present disclosure includes a second portion formed above the first portion and having a lateral width gradually widening from the lower side to the upper side.

According to one aspect of the present disclosure, by widening the lateral width of an upper portion of the second portion, a portion (the upper portion of the support member) to which the front detection section is attached can be widely secured.

The front detection section according to an aspect of the present disclosure is supported by the support member such that an attachment angle with respect to the support member is changeable.

According to one aspect of the present disclosure, the detection target in front of the vehicle body can be suitably detected by adjusting the angle of the front detection section.

The support member according to one aspect of the present disclosure includes an opening formed in the support member, the opening penetrating the support member in a front-rear direction.

According to one aspect of the present disclosure, air can be easily taken into a bonnet through the opening.

The weight support portion according to an aspect of the present disclosure includes a hitch pin holding portion formed in the weight support portion, the hitch pin holding portion being capable of holding a hitch pin, and the opening is formed at a position overlapping with the hitch pin holding portion in a vertical direction.

According to one aspect of the present disclosure, it is possible to prevent the hitch pin from interfering with the support member when the hitch pin is inserted and removed.

The support member according to one aspect of the present disclosure includes a partition portion that partitions an internal space of the support member and the opening.

According to one aspect of the present disclosure, rainwater, dust, and the like can be suppressed from entering the internal space of the support member from the opening.

A front side surface of the support member according to one aspect of the present disclosure includes a front side surface of the support member includes a first erect surface, a second erect surface formed on an upper side of the first erect surface and formed to be inclined forward with respect to the first erect surface, and a third erect surface formed on an upper side of the second erect surface and formed in parallel with the first erect surface.

According to one aspect of the present disclosure, a space for disposing the weight member can be secured below the front side surface of the support member.

The support member according to an aspect of the present disclosure is disposed between left and right headlights in a front view.

According to one aspect of the present disclosure, inhibition of light irradiated forward from the headlights can be suppressed.

The support member according to one aspect of the present disclosure is disposed between the left and right work lights in a front view.

According to one aspect of the present disclosure, inhibition of light irradiated forward from work lights can be suppressed.

At least one of the front detection section and the support member according to an aspect of the present disclosure includes a reference portion serving as a reference of a direction of the vehicle body.

According to one aspect of the present disclosure, it is possible to easily grasp the direction of the vehicle body of the working vehicle.

According to one aspect of the present disclosure, workability such as maintenance by a worker can be improved.

### BRIEF DESCRIPTION OF DRAWINGS

Fig. 1 is a side view illustrating an overall configuration of a tractor according to an embodiment of the present disclosure;
Fig. 2 is a front view illustrating a weight support portion and a support member;
Fig. 3 is a side view illustrating the weight support portion and the support member;
Fig. 4 is a front perspective view illustrating the weight support portion and the support member;
Fig. 5 is a rear exploded perspective view illustrating the weight support portion and the support member;
Fig. 6 is a rear exploded perspective view illustrating the support member;
Fig. 7 is a rear perspective view illustrating an upper portion of a front side member;
Fig. 8 is a schematic side cross-sectional view illustrating the weight support portion and the support member;
Fig. 9A is a front view illustrating a front side radar unit provided with a reference portion; and
Fig. 9B is a side view illustrating the front side radar unit provided with the reference portion.

### DESCRIPTION OF EMBODIMENTS

In the following description, directions indicated by arrows U, D, F, B, L, and R in the drawings are defined as an upward direction, a downward direction, a forward direction, a backward direction, a left direction, and a right direction, respectively.

First, an overall configuration of a tractor 1 according to an aspect of the present disclosure will be described.

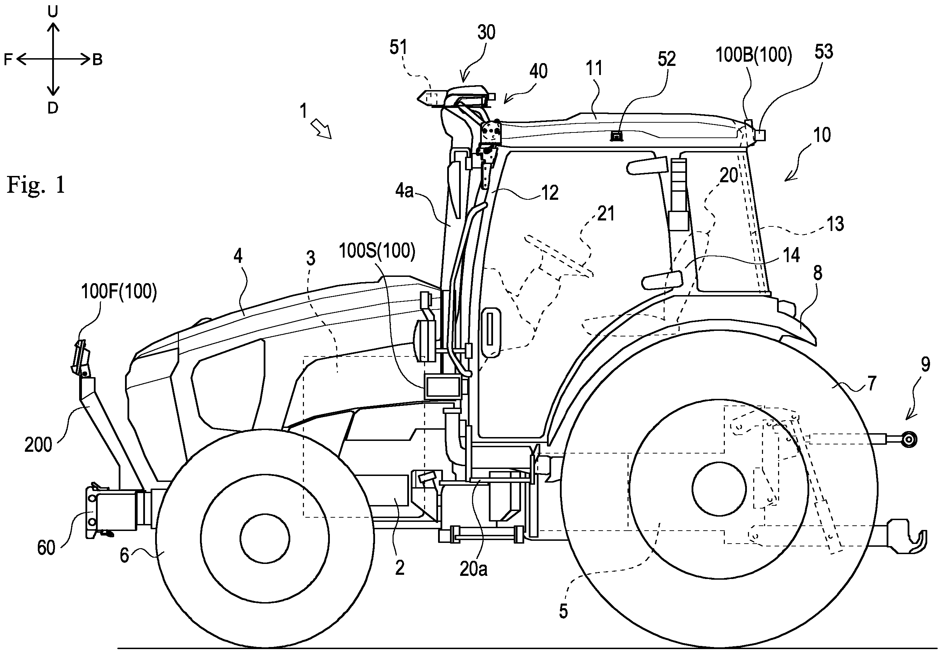

The tractor 1 illustrated in Fig. 1 mainly includes a body frame 2, an engine 3, a bonnet 4, a transmission case 5, front wheels 6, rear wheels 7, a fender 8, a lifting device 9, a cabin 10, a seat 20, a steering wheel 21, and the like.

The machine body frame 2 is a frame-shaped member formed by appropriately combining a plurality of panel members. The machine body frame 2 is formed in a substantially rectangular shape in plan view. The machine body frame 2 is disposed in a front portion of the tractor 1 with its longitudinal direction oriented in a front-rear direction. The engine 3 is fixed to a rear portion of the machine body frame 2. The engine 3 is covered with the bonnet 4. The transmission case 5 is fixed to a rear portion of the engine 3. A muffler 4a that discharges exhaust gas of the engine 3 is disposed on a right side of the bonnet 4.

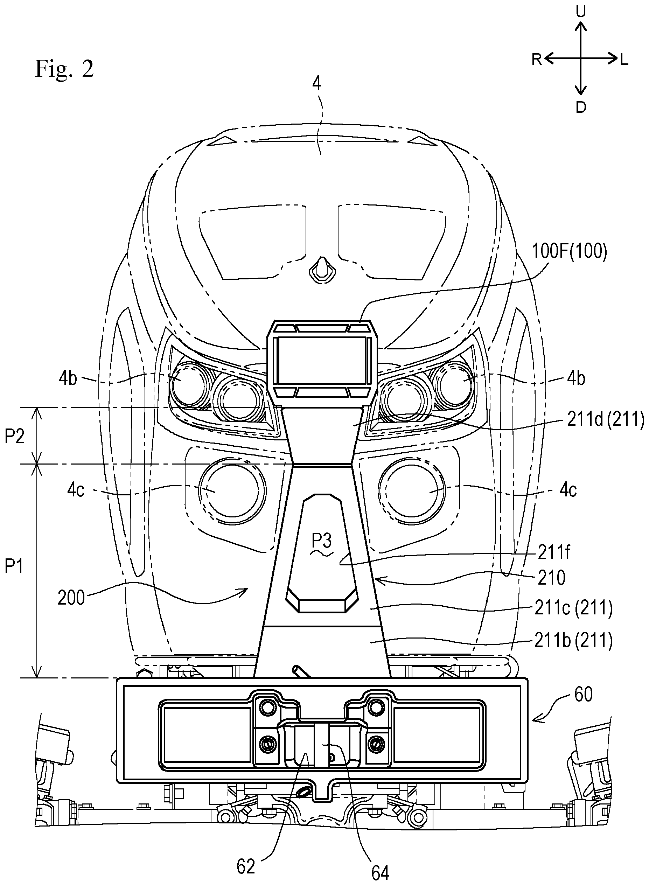

Furthermore, as illustrated in Fig. 2, work lights 4b and headlights 4c are provided on a front surface of the bonnet 4. The work lights 4b and the headlights 4c are provided on both left and right sides of the front surface of the bonnet 4 at intervals in the left and right direction, respectively. Furthermore, the bonnet 4 is appropriately provided with a mesh portion having an infinite number of small holes. As a result, air can be taken in from the outside to the inside of the bonnet 4 to cool the engine 3 and the like.

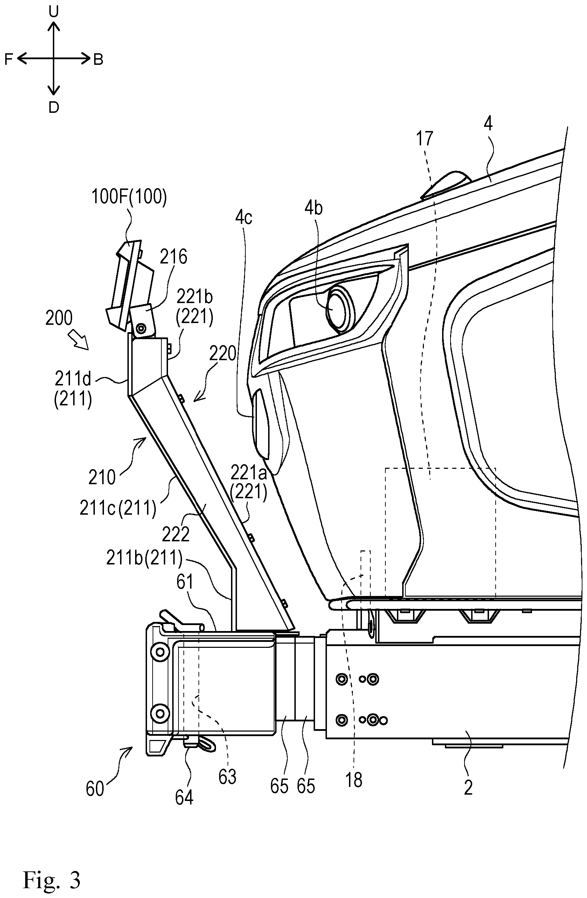

Furthermore, as illustrated in Fig. 3, a battery 17 and a bonnet lock mechanism 18 are provided inside the bonnet 4. The battery 17 is placed on near the front end of the body frame 2. The bonnet lock mechanism 18 is disposed in front of the battery 17. The bonnet lock mechanism 18 can hold the bonnet 4 in a closed state. By releasing the holding of the bonnet 4 by the bonnet lock mechanism 18, the bonnet 4 can be rotated upward to open the inside of the bonnet 4.

As illustrated in Fig. 1, a weight support portion 60 for supporting a weight member serving as a weight is provided at the front end of the body frame 2. The front portion of the body frame 2 is supported by a pair of the left and right front wheels 6 through a front axle mechanism (not illustrated). A rear portion of the transmission case 5 is supported by the pair of left and right rear wheels 7 through a rear axle mechanism (not illustrated). A pair of the left and right rear wheels 7 is covered with the fender 8 from substantially above.

The lifting device 9 is provided at a rear portion of the transmission case 5. Various working devices (for example, a cultivator or the like) can be mounted on the lifting device 9. The lifting device 9 can lift and lower the mounted working device by an actuator such as a hydraulic cylinder. Power of the engine 3 can be transmitted to the lifting device 9 through a PTO shaft (not illustrated).

Power of the engine 3 can be transmitted to the front wheels 6 through the front axle mechanism and can be transmitted to the rear wheels 7 through the rear axle mechanism after being shifted by a transmission (not illustrated) accommodated in the transmission case 5. The front wheels 6 and the rear wheels 7 are rotationally driven by the power of the engine 3, and the tractor 1 can travel. Furthermore, the working device mounted on the lifting device 9 can be driven by the power of the engine 3.

The cabin 10 is provided behind the engine 3. The cabin 10 is placed on a vehicle body (such as the transmission case 5). A living space in which a driver gets is formed inside the cabin 10.

The cabin 10 includes a front pillar 12 that supports a front portion of the roof 11, a rear pillar 13 that supports a rear portion of the roof 11, and a center pillar 14 that supports a substantially central portion (intermediate portion) in the front-rear direction of the roof 11. The pillars are provided so as to be located on both left and right sides of the cabin 10. Furthermore, the cabin 10 includes a beam (not illustrated) that connects the upper ends of the front pillar 12, the rear pillar 13, and the center pillar 14.

The roof 11, the front pillar 12, the rear pillar 13, the center pillar 14, and the beam are formed in a hollow shape. In the roof 11, each of the pillars, and the beam, wiring connected to equipment (for example, a radar unit 100 to be described later) provided in the tractor 1 can be inserted into an internal space.

As illustrated in Fig. 1, the seat 20 on which a driver sits is disposed substantially at the center of the cabin 10. Furthermore, the cabin 10 is provided with an auxiliary step 20a for getting in and off the seat 20. Furthermore, the steering wheel 21 for adjusting a turning angle of the front wheel 6 is disposed in the front portion of the cabin 10.

Furthermore, the tractor 1 includes a position detection device 30 capable of detecting a position of the vehicle body, a camera (front camera 51, side camera 52, and rear camera 53) capable of imaging the surroundings of the vehicle body, and a radar unit 100 capable of detecting a detection target around the vehicle body.

The position detection device 30 is a device capable of detecting the position (position information including latitude and longitude) of the vehicle body using a satellite positioning system (GNSS(Global Navigation Satellite System)) such as a GPS, various sensors, and the like. The position detection device 30 includes an appropriate reception unit for receiving a satellite signal transmitted from a satellite.

The position detection device 30 is supported by a support mechanism 40 attached to the cabin 10. The support mechanism 40 is disposed across the left and right front pillars 12. The support mechanism 40 is disposed so as to be located in front of the roof 11. Furthermore, the support mechanism 40 is provided to be rotatable with respect to the left and right front pillars 12 about a central axis facing the left and right direction through left and right connection portions. Note that the support mechanism 40 may be unrotatably fixed to the left and right front pillars 12. The position detection device 30 is disposed substantially at the center of the tractor 1 in the left-right direction.

A plurality (five in the present embodiment) of the cameras (front camera 51, side camera 52, and rear camera 53) is provided in the cabin 10. Specifically, the front camera 51 is provided in a front portion of the cabin 10. A pair of the left and right side cameras 52 is provided on both left and right sides of the cabin 10. A pair of the left and right rear cameras 53 is provided in a rear portion of the cabin 10.

Each camera is disposed so as to face downward at an angle of approximately 45 degrees with respect to the horizontal ground. By unifying the angles in this manner, it is possible to improve the distance measurement performance of each camera and to optimize the visual field of each camera.

By using each of the above cameras, the front, right and left sides, and rear of the tractor 1 can be imaged. The tractor 1 can control the operation of the vehicle body based on the images captured by the cameras. For example, it is possible to learn the appearance of a person on the basis of an image captured by each camera, and perform control to stop the tractor 1 in a case where the person approaches the vicinity of the tractor 1 from an imaging result of each camera. Note that the use of each camera is not limited to this, and the captured image can be used for various uses.

The radar unit 100 can detect a detection target around the vehicle body using radio waves (for example, millimeter waves). Examples of the detection target include a structure formed of metal or concrete, another vehicle, and a person. The radar unit 50 is provided with a sensor (for example, a millimeter wave sensor) that emits radio waves and receives the radio waves reflected by a detection target to detect the detection target.

In the present embodiment, a plurality (four) of the radar units 100 (front side radar unit 100F, rear radar unit 100B, and a pair of left and right side radar units 100S) is provided in the tractor 1. Specifically, the front side radar unit 100F is provided in the front portion of the bonnet 4 of the tractor 1. Furthermore, the rear radar unit 100B is provided in the rear portion of the cabin 10. Furthermore, the side radar units 100S are provided on both left and right sides of the cabin 10.

The front side radar unit 100F is disposed in front of the bonnet 4 through a support member 200 described later. The rear radar unit 100B is provided in the rear portion of the cabin 10 (roof 11). The side radar units 100S are provided on left and right sides (left and right front pillars 12) of the cabin 10.

The position detection device 30, the cameras (front camera 51, side cameras 52, and rear cameras 53), and the radar units 100 are communicably connected to an appropriate control device capable of controlling traveling of the tractor 1 through wiring. The control device can detect position information of the vehicle body based on a GNSS signal received by the position detection device 30. Furthermore, the control device can execute control (control of autonomous driving) for autonomously driving the tractor 1 based on the position information, the images captured by the cameras, and the detection results of the radar units 100. The control of the autonomous driving includes, for example, control of autonomously steering the vehicle body so as to travel straight in parallel to a set predetermined traveling reference line, control of autonomously traveling the vehicle body along the created target traveling route, and control of autonomously stopping or decelerating the traveling of the vehicle body by detecting an obstacle around the vehicle body.

Hereinafter, the support structure of the front side radar unit 100F will be specifically described.

The front side radar unit 100F of the present embodiment is attached to the weight support portion 60 through the support member 200. Therefore, the configurations of the weight support portion 60 and the support member 200 will be specifically described below.

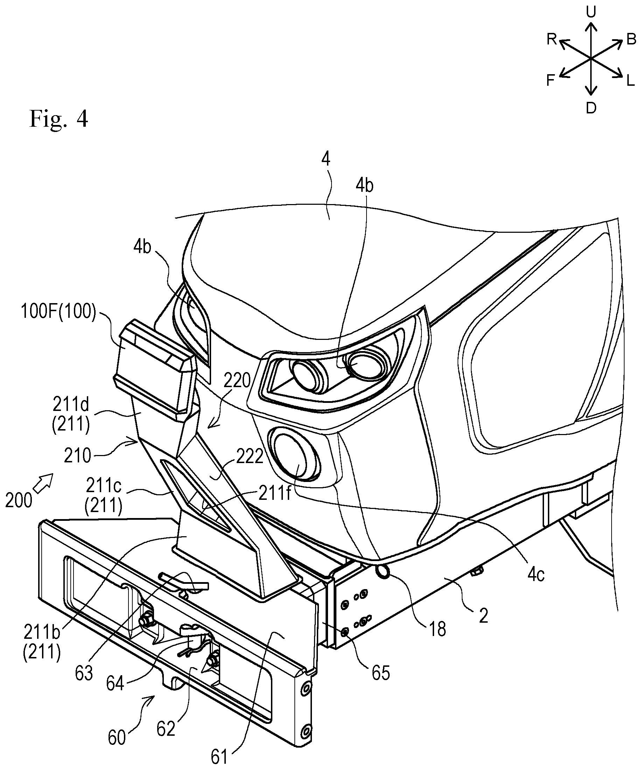

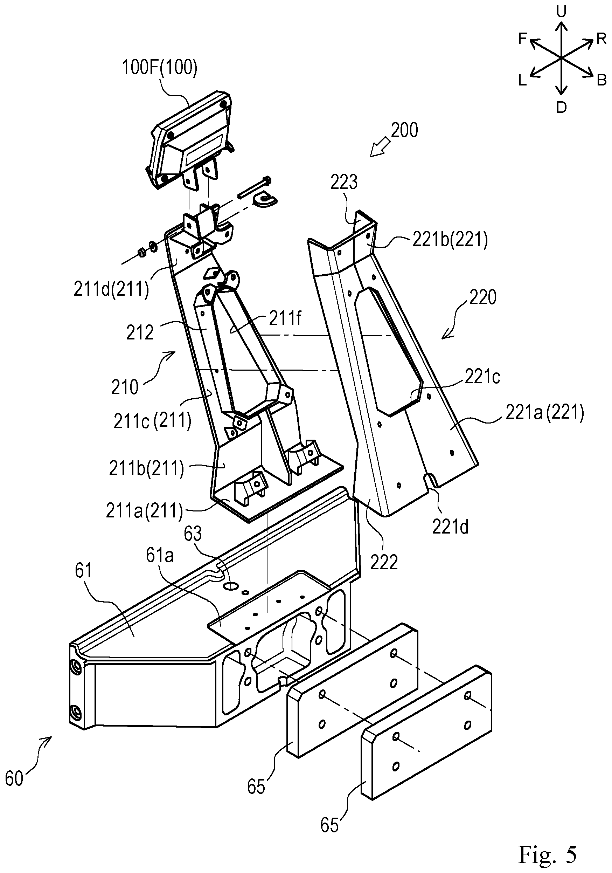

The weight support portion 60 illustrated in Figs. 2 to 5 is for supporting a weight member serving as a weight. The weight support portion 60 is formed by casting, for example. The weight support portion 60 is formed in a trapezoidal shape in plan view such that a lateral width increases toward the front. An upper surface 61 of the weight support portion 60 is formed to be substantially horizontal. A recess 61a slightly recessed downward with respect to the periphery is formed at a rear end portion of the upper surface 61 (see Fig. 5). The recess 61a is formed in a shape (rectangular shape in plan view) corresponding to a bottom portion 211a of the support member 200 described later.

A hitch pin holding portion 63 for holding a substantially cylindrical hitch pin 64 is formed in the weight support portion 60. The hitch pin holding portion 63 is a through hole formed to vertically penetrate the front portion of the weight support portion 60 (the front portion of the recess 61a). The hitch pin 64 can be held by inserting the hitch pin 64 into the hitch pin holding portion 63. The hitch pin 64 held by the hitch pin holding portion 63 is exposed forward through an opening 62 formed on a front side surface of the weight support portion 60. By fixing a wire or the like connected to another vehicle or the like to the hitch pin 64, it is possible to tow another vehicle or the like with the own vehicle or tow the own vehicle with another vehicle.

The weight support portion 60 is fixed to a front end of the body frame 2 with a fixing tool such as a bolt. At this time, by disposing a plate-shaped spacer 65 between the body frame 2 and the weight support portion 60 as necessary, a front-rear position of the weight support portion 60 with respect to the body frame 2 can be adjusted.

Note that, in the present embodiment, the weight support portion 60 formed by the casting is exemplified, but the disclosure is not limited thereto, and the configuration of the weight support portion 60 is not particularly limited. For example, the weight support portion 60 can also be configured by combining a metal panel member or the like.

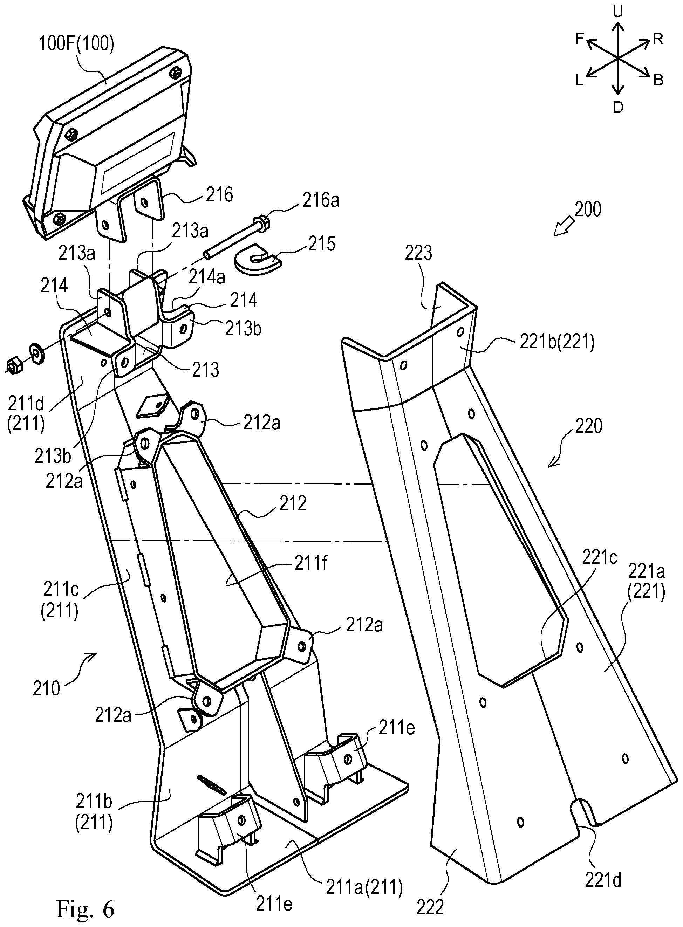

The support member 200 illustrated in Figs. 5 and 6 is for supporting the front side radar unit 100F. The support member 200 mainly includes a front side member 210 and a rear side member 220.

The front side member 210 is a member constituting a front portion of the support member 200. The front side member 210 mainly includes a front side surface portion 211, a partition portion 212, a support portion 213, a closing portion 214, a grommet 215, and a vertical rotation portion 216.

The front side surface portion 211 is a portion mainly forming a front side surface of the support member 200. The front side surface portion 211 mainly includes a bottom portion 211a, a front side first erect surface 211b, a front side second erect surface 211c, a front side third erect surface 211d, and a lower fixing portion 211e.

The bottom portion 211a is a plate-like portion forming a bottom surface of the support member 200. The bottom portion 211a is disposed substantially horizontally. The bottom portion 211a is formed in a substantially rectangular shape in plan view.

The front side first erect surface 211b is a plate-like portion formed so as to rise from a front end of the bottom portion 211a. The front side first erect surface 211b is formed with the plate surface facing the front-rear direction. The front side first erect surface 211b is disposed substantially parallel to the vertical direction.

The front side second erect surface 211c is a plate-like portion extending forward and upward from an upper end of the front side first erect surface 211b. The front side second erect surface 211c is formed so as to be inclined forward with respect to the front side first erect surface 211b. A front side through hole 211f penetrating the front side second erect surface 211c in the front-rear direction is formed in the front side second erect surface 211c.

The front side third erect surface 211d is a plate-like portion extending upward from an upper end of the front side second erect surface 211c. The front side third erect surface 211d is disposed substantially parallel to the vertical direction. That is, the front side third erect surface 211d is formed so as to be substantially parallel to the front side first erect surface 211b.

As illustrated in Fig. 2, the front side first erect surface 211b and the front side second erect surface 211c are formed such that a lateral width gradually narrows from a lower side to an upper side. Furthermore, the front side third erect surface 211d is formed such that a lateral width gradually widens from a lower side toward an upper side.

The lower fixing portion 211e illustrated in Fig. 6 is a portion to which the rear side member 220 is fixed. The lower fixing portion 211e is formed by appropriately bending a flat plate-shaped member. The lower fixing portion 211e is fixed to an upper surface of the bottom portion 211a. One lower fixing portion 211e is provided on each of the left and right sides of the bottom portion 211a.

The partition portion 212 partitions an internal space of the support member 200 formed by the front side member 210 and the rear side member 220, and an opening formed by the front side through hole 211f and a rear side through hole 221c. The partition portion 212 is formed to stand rearward from a rear side surface of the front side second erect surface 211c. The partition portion 212 is formed so as to surround the periphery of the front side through hole 211f. In particular, in the present embodiment, the partition portion 212 is formed so as to surround the periphery of the front side through hole 211f without a gap. The partition portion 212 is provided with a fixing portion 212a.

The fixing portion 212a is a portion to which the rear side member 220 is fixed. The fixing portion 212a is formed by appropriately bending a flat plate-shaped member. The fixing portion 212a is fixed to a side surface of the partition portion 212. Two fixing portions 212a are provided in an upper portion and two fixing portions are provided in a lower portion of the partition portion 212.

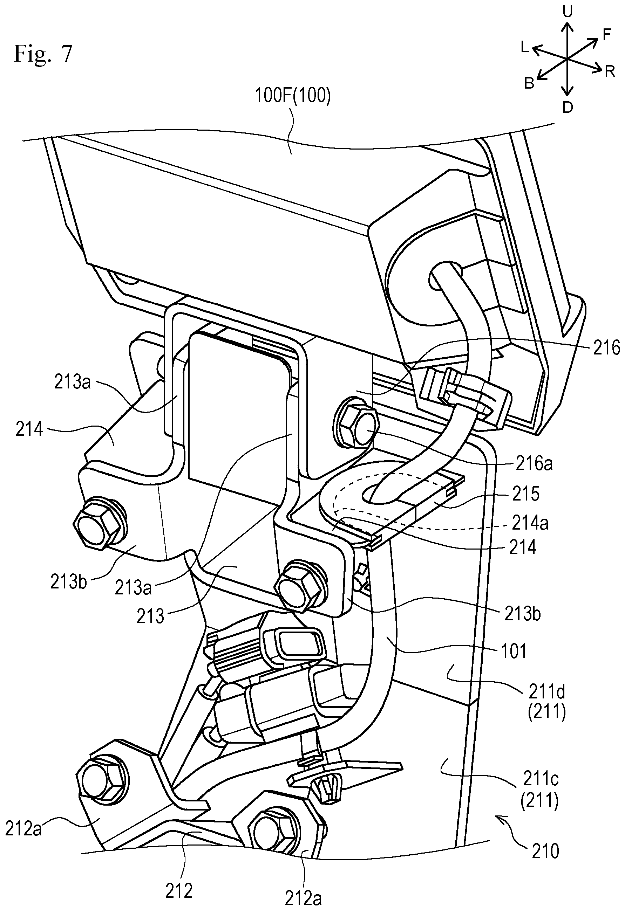

The support portion 213 illustrated in Figs. 6 and 7 is a portion to which the front side radar unit 100F is fixed. The support portion 213 is formed by appropriately bending a flat plate-shaped member. The support portion 213 is fixed to the vicinity of an upper end portion of the rear side surface of the front side third erect surface 211d. The support portion 213 is formed with an erect portion 213a and an upper fixing portion 213b.

The erect portion 213a is a portion erected upward. A pair of the left and right erect portions 213a is formed so as to face each other. The erect portion 213a is formed so as to protrude upward from the upper end of the front side surface portion 211.

The upper fixing portion 213b is a portion to which the rear side member 220 is fixed. The upper fixing portion 213b is formed with the plate surface facing rearward. A pair of the left and right upper fixing portions 213b is formed below the erect portion 213a.

The closing portion 214 closes a gap formed between the upper end portion of the front side member 210 and the upper end portion of the rear side member 220. The closing portion 214 is formed in a flat plate shape. The closing portions 214 are disposed substantially horizontally and are disposed on the left and right sides of the support portion 213, respectively. As a result, a gap (upper opening portion) formed between the front side member 210 and the rear side member 220 described later can be closed. A cutout portion 214a through which a wiring 101 of the front side radar unit 100F passes is formed in the closing portion 214 on the right side.

The grommet 215 closes the cutout portion 214a through which the wiring 101 is inserted and protects the wiring 101. The grommet 215 is formed by a relatively soft material (for example, an elastic material such as rubber). The grommet 215 is formed in a shape corresponding to the cutout portion 214a. The grommet 215 is fitted into the cutout portion 214a. The wiring 101 can be vertically passed through a through hole formed in the grommet 215.

The vertical rotation portion 216 is fixed to the front side radar unit 100F and is vertically rotatably connected to the support portion 213. The vertical rotation portion 216 is appropriately fixed to a back lower portion of the front side radar unit 100F. The vertical rotation portion 216 is formed such that a pair of left and right side walls extends downward.

The pair of side walls of the vertical rotation portion 216 is connected to the erect portion 213a through a support shaft 216a in a state where the erect portion 213a is disposed so as to be located between the pair of side walls. In the present embodiment, the support shaft 216a is formed of a bolt. The vertical rotation portion 216 is supported so as to be vertically rotatable about the support shaft 216a by loosening the support shaft 216a (bolt). The support shaft 216a is tightened while the front side radar unit 100F is oriented at an arbitrary angle, so that the angle of the front side radar unit 100F in the vertical direction can be adjusted.

The rear side member 220 illustrated in Figs. 5 and 6 is a member constituting a rear portion of the support member 200. The rear side member 220 mainly includes a rear side surface portion 221, a left side surface portion 222, and a right side surface portion 223.

The rear side surface portion 221 mainly forms a rear side surface of the support member 200. The rear side surface portion 221 mainly includes a rear side first erect portion 221a and a rear side second erect portion 221b.

The rear side first erect portion 221a is a plate-like portion formed with the plate surface facing the front-rear direction. The rear side first erect portion 221a is formed in a forward inclined posture extending from the rear lower side toward the front upper side. The rear side first erect portion 221a is formed at an angle closer to the vertical than the front side second erect surface 211c (see Fig. 3).

The rear side through hole 221c penetrating the rear side first erect portion 221a in the front-rear direction is formed in the rear side first erect portion 221a. The rear side through hole 221c is formed in a shape (substantially the same shape) corresponding to the front side through hole 211f formed in the front side second erect surface 211c.

A cutout portion 221d is formed at a lower end portion of the rear side first erect portion 221a. The cutout portion 221d is formed at the center in the right-left direction of the lower end portion of the rear side first erect portion 221a.

The rear side second erect portion 221b is a plate-like portion extending upward from the upper end of the rear side first erect portion 221a. The rear side second erect portion 221b is disposed substantially parallel to the vertical direction.

Similarly to the front side first erect surface 211b and the front side second erect surface 211c, the rear side first erect portion 221a is formed such that the lateral width gradually narrows from the lower side to the upper side. Furthermore, similarly to the front side third erect surface 211d, the rear side second erect portion 221b is formed such that a lateral width gradually widens from a lower side to an upper side. As a result, in a state where the rear side member 220 is fixed to the front side member 210, as illustrated in Fig. 2, the rear side member 220 is disposed so that substantially the entire rear side member is hidden behind the front side member 210 in front view (so as to overlap the front side member 210).

The left side surface portion 222 mainly forms a left side face of the support member 200. The left side surface portion 222 is formed in a plate shape extending forward from a left end portion of the rear side surface portion 221. The left side surface portion 222 is formed from the upper end to the lower end of the rear side surface portion 221. A front end edge portion of the left side surface portion 222 is formed to have a shape corresponding to the shape of the back surface of the front side surface portion 211. As a result, when the rear side member 220 is fixed to the front side member 210, the left side surface portion 222 can be in contact with the front side surface portion 211 of the front side member 210 substantially without a gap. The left side surface portion 222 is formed integrally with the rear side surface portion 221. For example, the rear side surface portion 221 and the left side surface portion 222 can be formed by appropriately bending one plate-shaped member.

The right side surface portion 223 mainly forms the right side surface of the support member 200. Note that since the right side surface portion 223 is formed in a substantially bilaterally symmetrical shape with the left side surface portion 222, a detailed description thereof will be omitted.

Note that, in the present embodiment, an example in which the left side surface portion 222 and the right side surface portion 223 are integrally formed with the rear side surface portion 221 has been described, but the disclosure is not limited thereto. For example, the left side surface portion 222 and the right side surface portion 223 can be formed integrally with the front side member 210 (front side surface portion 211).

The support member 200 configured as described above is fixed to the weight support portion 60. Specifically, as illustrated in Fig. 5, the bottom portion 211a of the front side member 210 is placed on the recess 61a of the weight support portion 60 and fixed to the upper surface 61 of the weight support portion 60 with a fixing tool such as a bolt. Furthermore, as illustrated in Figs. 5 and 6, the rear side member 220 is fixed to the rear portion of the front side member 210. At this time, the rear side member 220 is fixed to the front side member 210 (lower fixing portion 211e, fixing portion 212a, and upper fixing portion 213b) by a fixing tool such as a bolt. The fixing tool (a bolt or the like) for fixing the rear side member 220 is fastened to the front side member 210 from the back side of the rear side surface portion 221. Therefore, the fixing tool is less likely to be visually recognized when the tractor 1 is viewed from the front, so that the design of the tractor 1 can be improved.

In this manner, by fixing the support member 200 to the upper surface of the weight support portion 60, workability such as maintenance by the worker can be improved. For example, when opening and closing the bonnet 4 using the bonnet lock mechanism 18 illustrated in Fig. 3, maintenance of the battery 17, and the like are performed, the support member 200 is less likely to interfere with work.

Furthermore, since the support member 200 is fixed to the recess 61a formed at the rear end portion of the upper surface 61 of the weight support portion 60, as illustrated in Fig. 3, a space for attaching a weight member (not illustrated) can be secured in the front portion of the weight support portion 60. In particular, in the present embodiment, by bending the front side surface portion 211 of the support member 200, a space above the weight support portion 60 is secured, and the attachment and detachment work of the weight member (not illustrated) is facilitated.

Furthermore, in a state where the rear side member 220 illustrated in Figs. 5 and 6 is fixed to the front side member 210, the front ends of the left side surface portion 222 and the right side surface portion 223 of the rear side member 220 approach to the vicinity of the front side member 210 (front side surface portion 211). In this manner, the support member 200 is formed in a hollow shape surrounded on the front, rear, left and right sides by the front side surface portion 211, the rear side surface portion 221, the left side surface portion 222, and the right side surface portion 223.

By forming the support member 200 in a hollow shape, various components and the like can be accommodated in the support member 200. For example, in the present embodiment, as illustrated in Fig. 7, the wiring 101, a connector, and the like of the front side radar unit 100F are accommodated in the support member 200. The wiring 101 can be taken out to the rear side (vehicle body side) of the support member 200 through the cutout portion 221d (see Fig. 6), for example. By accommodating the wiring 101 in the support member 200, the appearance can be improved, and it is possible to prevent mud, dust, or the like from adhering to or damaging the wiring 101.

Note that the wiring 101 is not necessarily accommodated inside the support member 200, and can be disposed outside the support member 200, for example. In this case, it is desirable to provide a cover member or the like that covers the wiring 101 in order to protect the wiring 101.

In a state where the rear side member 220 is fixed to the front side member 210, the rear end of the partition portion 212 of the front side member 210 approaches the vicinity of the rear side through hole 221c of the rear side member 220. In this manner, the partition portion 212 is disposed so as to connect the front side through hole 211f and the rear side through hole 221c. Furthermore, the partition portion 212 is disposed so as to partition the front side through hole 211f and the rear side through hole 221c from the inner space of the support member 200 formed in a hollow shape.

As illustrated in Fig. 2, the support member 200 is disposed substantially at the center on the left and right of the vehicle body. Thus, the support member 200 is disposed between the left and right headlights 4c and the left and right work lights 4b in front view. As illustrated in Fig. 3, the support member 200 can support the front side radar unit 100F at a position higher than the front upper end portion of the bonnet 4.

Furthermore, the support member 200 includes a portion (hereinafter referred to as "first portion P1") in which the lateral width gradually narrows from the lower side to the upper side. The first portion P1 includes the front side first erect surface 211b, the front side second erect surface 211c, and the like. By widening the lateral width of the lower portion of the first portion P1, the rigidity of the lower portion of the support member 200 can be improved, and vibration of the front side radar unit 100F can be suppressed. Furthermore, by narrowing the lateral width of the upper portion of the first portion P1, it is possible to suppress inhibition of light irradiated forward from the headlight 4c. Furthermore, by narrowing the lateral width of the upper portion of the first portion P1, the front surface of the bonnet 4 can be exposed as much as possible in a front view, and air can be easily taken into the bonnet 4. As a result, it is possible to prevent degradation of cooling performance or the like of the engine 3.

Furthermore, the support member 200 includes a portion (hereinafter referred to as "second portion P2") whose lateral width gradually widens from the lower side to the upper side. The second portion P2 is formed above the first portion P1. The second portion P2 includes the front side third erect surface 211d and the like. By widening the lateral width of the upper portion of the second portion P2, it is possible to secure a wide portion (upper end portion of the support member 200) to which the front side radar unit 100F is attached. Furthermore, by widening the lateral width of the second portion P2, for example, a space for attaching a decorative part such as a logo mark can be secured on the front side surface of the second portion P2.

Furthermore, the support member 200 includes an opening P3 penetrating the support member 200 in the front-rear direction. The opening P3 includes the front side through hole 211f, the rear side through hole 221c, and the like. By forming the opening P3 in this manner, the front surface of the bonnet 4 can be exposed as much as possible in a front view, and air can be easily taken into the bonnet 4.

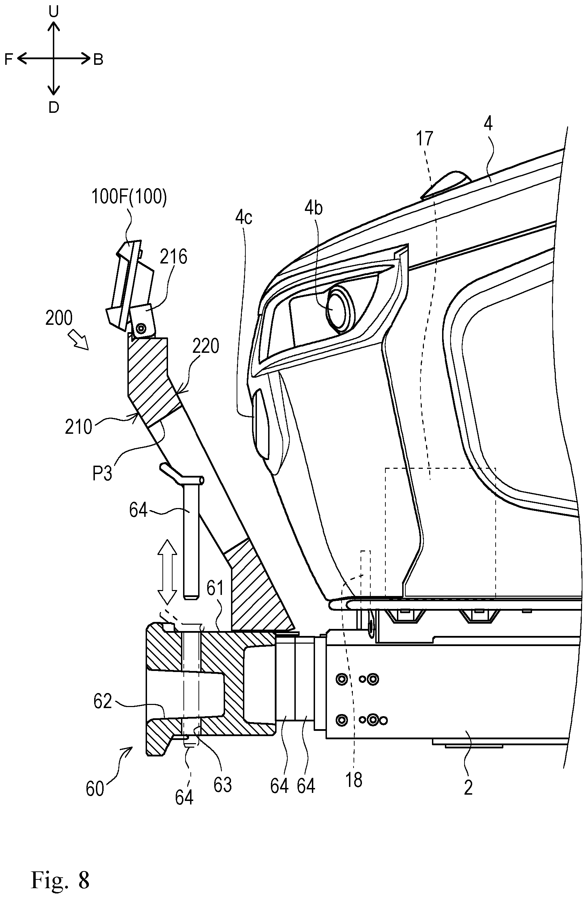

Furthermore, as illustrated in Fig. 8, the opening P3 is formed above the hitch pin holding portion 63 formed in the weight support portion 60 (at a position overlapping with the hitch pin holding portion 63 in the vertical direction). With this configuration, it is possible to suppress interference between the hitch pin 64 and the support member 200 when the hitch pin 64 is attached to and detached from (inserted into and removed from) the hitch pin holding portion 63. Note that, although the support member 200 has a hollow shape as described above, Fig. 8 illustrates a cross section (hatched portion) of the support member 200 in a simplified manner.

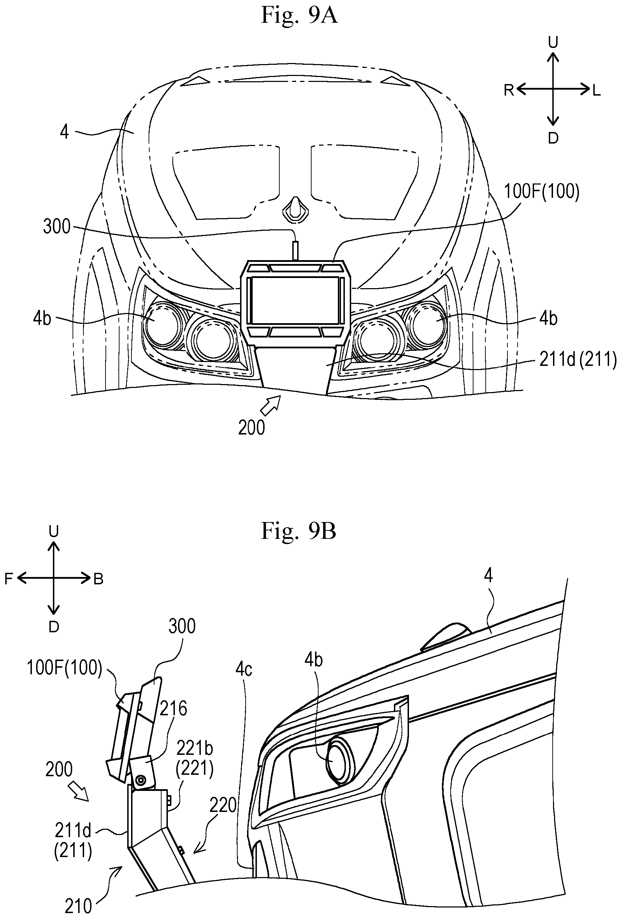

Hereinafter, a modification of the tractor 1 will be described with reference to Fig. 9.

Fig. 9 illustrates a modification in which the reference portion 300 is provided above the front side radar unit 100F. The reference portion 300 is formed of, for example, a plate-shaped member having a plate surface facing left and right. The reference portion 300 is fixed to the back surface of the front side radar unit 100F. The reference portion 300 is provided so as to protrude upward from the front side radar unit 100F. The reference portion 300 is disposed at the center in the left-right direction (as a result, the lateral center of the vehicle body) of the front side radar unit 100F.

A worker (driver) riding in the cabin 10 can visually recognize the reference portion 300 from inside the cabin 10. The worker can easily grasp the direction of the vehicle body of the tractor 1 by grasping the position of the reference portion 300 in a field of view (scenery such as a farm field) visually recognized from inside the cabin 10. As a result, the tractor 1 can be accurately operated in the farm field.

Note that, although Fig. 9 illustrates an example in which the reference portion 300 is provided in the front side radar unit 100F, the disclosure is not limited thereto. For example, the reference portion 300 can be provided not in the front side radar unit 100F but in the support member 200.

As described above, the tractor 1 (working vehicle) according to the present embodiment includes: the weight support portion 60 that is provided in a front portion of a vehicle body and supports a weight member; the front side radar unit 100F (front detection section) capable of detecting a detection target in front of the vehicle body; and the support member 200 that is fixed to the upper surface 61 of the weight support portion 60 and supports the front side radar unit 100F.

With such a configuration, workability such as maintenance by the worker can be improved. Specifically, by fixing the support member 200 to the upper surface 61 of the weight support portion 60, the support member 200 is less likely to obstruct work such as maintenance from the side of the tractor 1 (bonnet 4).

Furthermore, the support member 200 is formed in a hollow shape.

With such a configuration, various components can be accommodated inside. For example, by accommodating the wiring 101 of the front side radar unit 100F, damage and deterioration of the wiring 101 can be prevented.

Furthermore, the support member 200 includes: the front side member 210 that forms a front side surface of the support member 200; and the rear side member 220 that forms a rear side surface of the support member.

With such a configuration, the support member 200 can have a simple configuration.

Furthermore, the support member 200 includes a left side surface and a right side surface integrally formed with one of the front side member 210 and the rear side member 220.

With such a configuration, the support member 200 can have a simple configuration.

Furthermore, the support member 200 includes the first portion P1 having a lateral width gradually narrowing from a lower side to an upper side.

With such a configuration, rigidity of a lower portion of the support member 200 can be improved, and vibration of the front side radar unit 100F can be suppressed. Furthermore, by narrowing the lateral width of an upper portion of the support member 200, it is possible to make it difficult to block light emitted from the headlight 4c and the like.

Furthermore, the support member 200 includes the second portion P2 formed above the first portion P1 and having a lateral width gradually widening from the lower side to the upper side.

With such a configuration, by widening the lateral width of an upper portion of the second portion P2, a portion (the upper portion of the support member 200) to which the front side radar unit 100F is attached can be widely secured.

Furthermore, the front side radar unit 100F is supported by the support member 200 such that an attachment angle with respect to the support member 200 is changeable.

With this configuration, the detection target in front of the vehicle body can suitably be detected by adjusting the angle of the front side radar unit 100F.

Furthermore, the support member 200 includes the opening P3 formed in the support member, the opening penetrating the support member 200 in a front-rear direction.

With such a configuration, air can be easily taken into the bonnet 4 through the opening P3.

Furthermore, the weight support portion 60 includes the hitch pin holding portion 63 formed in the weight support portion, the hitch pin holding portion being capable of holding the hitch pin 64, and the opening P3 is formed at a position overlapping with the hitch pin holding portion 63 in a vertical direction.

With this configuration, it is possible to prevent the hitch pin 64 from interfering with the support member 200 when the hitch pin 64 is inserted and removed.

Furthermore, the support member 200 includes the partition portion 212 that partitions an internal space of the support member 200 and the opening P3.

With such a configuration, rainwater, dust, and the like can be suppressed from entering the internal space of the support member 200 from the opening P3.

Furthermore, a front side surface of the support member 200 includes: the front side first erect surface 211b (first erect surface); the front side second erect surface 211c (second erect surface) formed on the upper side of the front side first erect surface 211b and formed to be inclined forward with respect to the front side first erect surface 211b; and the front side third erect surface 211d (third erect surface) formed on an upper side of the front side second erect surface 211c and formed in parallel with the front side first erect surface 211b.

With such a configuration, a space for disposing the weight member can be secured below the front side surface of the support member 200.

Furthermore, the support member 200 is disposed between the left and right headlights 4c in a front view.

With such a configuration, it is possible to suppress inhibition of light irradiated forward from the headlights 4c.

Furthermore, the support member 200 is disposed between the left and right work lights 4b in a front view.

With such a configuration, it is possible to suppress inhibition of light irradiated forward from work lights 4b.

Furthermore, at least one of the front side radar unit 100F and the support member 200 includes the reference portion 300 serving as a reference of a direction of the vehicle body.

With such a configuration, the direction of the vehicle body of the tractor 1 can be easily grasped.

Note that the tractor 1 according to the present embodiment is an embodiment of the working vehicle according to the disclosure.

Furthermore, the front side radar unit 100F according to the present embodiment is an embodiment of the front detection section according to the disclosure.

Furthermore, the front side first erect surface 211b, the front side second erect surface 211c, and the front side third erect surface 211d according to the present embodiment are embodiments of the first erect surface, the second erect surface, and the third erect surface according to the disclosure, respectively.

Although each embodiment of the disclosure has been described above, the disclosure is not limited to the above configuration, and various modifications can be made within the scope of the invention described in the claims.

Specifically, the configuration of the support member 200 is not limited to the above-described embodiment, and can be arbitrarily changed. For example, although the support member 200 mainly includes two members of the front side member 210 and the rear side member 220, the disclosure is not limited thereto, and the support member 200 may include one member or three or more members.

Furthermore, in the present embodiment, the support member 200 formed in a hollow shape is exemplified, but for example, the support member 200 does not necessarily need to be formed in a hollow shape.

Furthermore, the shape of the support member 200 illustrated in the present embodiment is an example, and can be arbitrarily changed. For example, the support member 200 may be formed so as to have a constant lateral width.

Furthermore, in the present embodiment, the support member 200 in which the opening P3 is formed is exemplified, but the opening P3 is not necessarily formed in the support member 200.

Furthermore, in the present embodiment, the upper surface 61 of the weight support portion 60 to which the support member 200 is fixed is formed substantially horizontally, but the disclosure is not limited thereto. The upper surface 61 of the weight support portion 60 may be a surface facing substantially upward, and may be inclined with respect to the horizontal direction, for example.

Furthermore, the arrangement of the camera and the radar unit 100 is not limited to the example described in the above-described embodiment, and can be arbitrarily changed.

Furthermore, in the present embodiment, the radar unit 100 that performs detection using radio waves is employed as the detection section, but the disclosure is not limited to such an aspect. As the detection section, for example, various equipment capable of detecting a detection target around the vehicle body, such as an ultrasonic sensor, can be adopted.

Furthermore, in the above embodiment, the example in which the cabin 10 includes the front pillar 12, the rear pillar 13, and the center pillar 14 (six-pillar type) is adopted has been described, but the disclosure is not limited thereto. As the cabin 10, for example, various configurations such as a configuration not including the center pillar 14 (four-pillar type) can be adopted.

Furthermore, in the above embodiment, the tractor 1 has been exemplified as the working vehicle, but the working vehicle is not limited to such an aspect. For example, the working vehicle may be another agricultural vehicle, a construction vehicle, an industrial vehicle, or the like.

## Claims

1. A working vehicle (1) comprising:
a weight support portion (60) that is provided in a front portion of a vehicle body and supports a weight member;
a front detection section (100F) capable of detecting a detection target in front of the vehicle body; and
a support member (200) that is fixed to an upper surface (61) of the weight support portion (60) and supports the front detection section (100F).

2. The working vehicle (1) according to claim 1, wherein the support member (200) is formed in a hollow shape.

3. The working vehicle (1) according to claim 1, wherein the support member (200) includes a front side member (210) that forms a front side surface of the support member (200), and a rear side member (220) that forms a rear side surface of the support member (200).

4. The working vehicle (1) according to claim 3, wherein
the support member (200) includes a left side surface and a right side surface,
the left side surface and the right side surface being integrally formed with one of the front side member (210) and the rear side member (220).

5. The working vehicle (1) according to claim 1, wherein the support member (200) includes a first portion (P1) having a lateral width gradually narrowing from a lower side to an upper side.

6. The working vehicle (1) according to claim 5, wherein the support member (200) includes a second portion (P2) formed above the first portion (P1) and having a lateral width gradually widening from the lower side to the upper side.

7. The working vehicle (1) according to claim 1, wherein the front detection section (100F) is supported by the support member (200) such that an attachment angle with respect to the support member (200) is changeable.

8. The working vehicle (1) according to claim 1, wherein the support member (200) includes an opening (P3) formed in the support member (200), the opening penetrating the support member (200) in a front-rear direction.

9. The working vehicle (1) according to claim 8, wherein
the weight support portion (60) includes a hitch pin holding portion (63) formed in the weight support portion (60), the hitch pin holding portion (63) being capable of holding a hitch pin (64), and
the opening (P3) is formed at a position overlapping with the hitch pin holding portion (63) in a vertical direction.

10. The working vehicle (1) according to claim 8 or 9, wherein the support member (200) includes a partition portion (212) that partitions an internal space of the support member (200) and the opening (P3).

11. The working vehicle (1) according to claim 1, wherein a front side surface of the support member (200) includes a first erect surface (211b), a second erect surface (211c) formed on an upper side of the first erect surface (211b) and formed to be inclined forward with respect to the first erect surface (211b), and a third erect surface (211d) formed on an upper side of the second erect surface (211c) and formed in parallel with the first erect surface (211b).

12. The working vehicle (1) according to claim 1, wherein the support member (200) is disposed between left and right headlights (4c) in a front view.

13. The working vehicle (1) according to claim 1, wherein the support member (200) is disposed between the left and right work lights (4b) in a front view.

14. The working vehicle (1) according to claim 1, wherein at least one of the front detection section (100F) or the support member (200) includes a reference portion (300) serving as a reference of a direction of the vehicle body.
